# EUROPEAN PATENT APPLICATION

(11) **EP 4 568 199 A1**
(43) Date of publication of application: **11.06.2025**
(21) Application number: 22953580.2
(22) Date of filing: 04.08.2022
(51) Int. Cl.: H04L 27/00

(54) **ACCESS AUTHENTICATION METHOD AND DEVICE**

(71) Applicant: GUANGDONG OPPO MOBILE TELECOMMUNICATIONS CORP., LTD., Dongguan, Guangdong 523860 (CN)
(72) Inventor: HU, Rongyi, Dongguan, Guangdong 523860 (CN)
(74) Representative: RGTH
(86) International application number: PCT/CN2022/110273
(87) International publication number: WO 2024/026771

(57) **Abstract**

A method and device for access authentication are provided, the method includes: transmitting, by a first device, a target access request information to a second device, where the target access request information is transmitted through a back scattering mode, or the target access request information is transmitted through a back scattering mode and an active transmission mode, and the target access request information is used for the first device to access the second device.

## Description

### TECHNICAL FIELD

Embodiments of the present disclosure relate to the field of communications, and specifically to an access authentication method and a device.

### BACKGROUND

In the related technologies, the connections of traditional terminals to the network require authorization and authentication. After zero-power consumption devices are introduced, how to perform access authentication of zero-power consumption devices is a problem that needs to be solved.

### SUMMARY

The present disclosure provides an access authentication method and a device, which can achieve access authentication of a zero-power consumption device.

In a first aspect, there is provided an access authentication method, including:
transmitting, by a first device, target access request information to a second device, where the target access request information is transmitted through a back scattering mode, or the target access request information is transmitted through a back scattering mode and an active transmission mode, and the target access request information is used for the first device to access the second device.

In a second aspect, there is provided an access authentication method, including:
transmitting, by a second device, target access response information to a first device, where the target access response information is transmitted through a back scattering mode, or the access response information is transmitted through a back scattering mode and an active transmission mode, and the target access response information is response information of a target access request signal, and the target access request information is used for the first device to access the second device.

In a third aspect, there is provided a terminal device for performing the methods in the above first aspect or various implementations thereof.

Specifically, the terminal device includes a functional module for performing the methods in the above first aspect or various implementations thereof.

In a fourth aspect, there is provided a network device for performing the methods in the above second aspect or various implementations thereof.

Specifically, the network device includes a functional module for performing the method in the above second aspect or various implementations thereof.

In a fifth aspect, there is provided a terminal device, including a processor and a memory. The memory is configured to store a computer program, and the processor is configured to invoke and execute the computer program stored in the memory, so as to perform the methods in the above first aspect or various implementations thereof.

In a sixth aspect, there is provided a network device, including a processor and a memory. The memory is configured to store a computer program, and the processor is configured to invoke and execute the computer program stored in the memory, so as to perform the method in the above second aspect or various implementations thereof.

In a seventh aspect, there is provided a chip for implementing the methods of any one of the above first aspect to the above second aspect or various implementations thereof.

Specifically, the chip includes: a processor, configured to invoke a computer program from a memory and execute the computer program, so as to enable a device equipped with the apparatus to perform the method of any one of the above first aspect to the above second aspect or various implementations thereof.

In an eighth aspect, there is provided a computer readable storage medium, for storing a computer program, where the computer program enables a computer to perform the method of any one of the above first aspect to the above second aspect or various implementations thereof.

In a ninth aspect, there is provided a computer program product, including computer program instructions, where the computer program instructions enable a computer to perform the method of any one of the above first aspect to the above second aspect or various implementations thereof.

In a tenth aspect, there is provided a computer program, where the computer program, upon being executed on a computer, enables the computer to perform the method of any one of the above first aspect to the above second aspect or various implementations thereof.

Through the above technical solutions, in the access authentication, a device (such as a zero-power consumption device) that supports back scattering communication may use a back scattering mode to transmit access authentication related information (such as target access request information, target access response information), thereby realizing access authentication for the zero-power consumption device.

### BRIEF DESCRIPTION OF THE DRAWINGS

FIG. 1 is a schematic diagram of a communication system architecture provided by the embodiments of the present disclosure.
FIG. 2 is a schematic diagram of a zero-power consumption communication system according to an example of the present disclosure.
FIG. 3 is a schematic diagram of power harvesting according to an embodiment of the present disclosure.
FIG. 4 is a schematic diagram of back scattering communication according to an embodiment of the present disclosure.
FIG. 5 is a circuit schematic diagram of a resistance load modulation according to an embodiment of the present disclosure.
FIG. 6 is a schematic diagram of a radio frequency metric requirement of a receiver according to an embodiment of the present disclosure.
FIG. 7 is a schematic diagram of receiver blocking according to an embodiment of the present disclosure.
FIG. 8 is a schematic diagram of an access authentication method provided according to the embodiments of the present disclosure.
FIG. 9 is a schematic interaction diagram of another access authentication method provided according to the embodiments of the present disclosure.
FIG. 10 is a schematic interaction diagram of yet another access authentication method provided according to the embodiments of the present disclosure.
FIG. 11 is a schematic interaction diagram of yet another access authentication method provided according to the embodiments of the present disclosure.
FIG. 12 is a schematic interaction diagram of further another access authentication method provided according to the embodiments of the present disclosure.
FIG. 13 is a schematic block diagram of a communication device provided according to the embodiments of the present disclosure.
FIG. 14 is a schematic block diagram of another communication device provided according to the embodiments of the present disclosure.
FIG. 15 is a schematic block diagram of yet another communication device provided according to the embodiments of the present disclosure.
FIG. 16 is a schematic block diagram of a chip provided according to the embodiments of the present disclosure.
FIG. 17 is a schematic block diagram of a communication system provided according to the embodiments of the present disclosure.

### DETAILED DESCRIPTION

The technical solutions in the embodiments of the present disclosure will be described in conjunction with the drawings in the embodiments of the present disclosure, and apparently, the described embodiments are a part of the embodiments of the present disclosure, but not all of the embodiments. For the embodiments of the present disclosure, all other embodiments obtained by the ordinary skilled in the art without paying creative efforts belong to the protection scope of the present disclosure.

The technical solutions of the embodiments the present disclosure may be applied to various communication systems, such as: a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of an NR system, an LTE-based access to unlicensed spectrum (LTE-U) system, an NR-based access to unlicensed spectrum (NR-U) system, a Non-Terrestrial communication Network (NTN) system, a Universal Mobile Telecommunication System (UMTS), a Wireless Local Area Network (WLAN), a Wireless Fidelity (WiFi), a fifth-generation communication (5G) system, a cellular Internet of Things system, a cellular passive Internet of Things system or other communication systems, etc.

Generally speaking, a number of connections supported by a traditional communication system is limited and is easy to implement, however, with the development of the communication technology, the mobile communication system will not only support traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc, and the embodiments of the present disclosure may also be applied to these communication systems.

Optionally, the communication system in the embodiments of the present disclosure may be applied to a carrier aggregation (CA) scenario, may also be applied to a dual connectivity (DC) scenario, and may also be applied to a standalone (SA) network deployment scenario.

Optionally, the communication system in the embodiments of the present disclosure may be applied to an unlicensed spectrum, where the unlicensed spectrum may also be considered as a shared spectrum; or the communication system in the embodiments of the present disclosure may also be applied to a licensed spectrum, where the licensed spectrum may also be considered as an unshared spectrum.

The embodiments of the present disclosure describe various embodiments in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent or a user apparatus, etc.

In the embodiments of the present disclosure, the network device may be a device used for communicating with a mobile device. Herein, the network device may be an Access Point (AP) in the WLAN, a base station (Base Transceiver Station, BTS) in the GSM or CDMA, may also be a base station (NodeB, NB) in the WCDMA, or may also be an evolutional base station (Evolutional Node B, eNB or eNodeB) in the LTE, or a relay station or an access point, or a vehicle-mounted device, a wearable device, and a network device (gNB) in an NR network, a network device in the cellular Internet of Things, or a network device in the cellular passive Internet of Things or a network device in the future evolved PLMN network or a network device in the NTN network, etc.

As an example but not a limitation, in the embodiments of the present disclosure, the network device may have a mobile characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station provided on land, water, and other places.

In the embodiments of the present disclosure, the network device may provide a service for a cell, and the terminal device communicates with the network device through a transmission resource (such as a frequency domain resource, or a frequency spectrum resource) used by the cell. The cell may be a cell corresponding to the network device (such as the base station), the cell may belong to a macro base station or may also belong to a base station corresponding to a small cell and the small cell herein may include: a metro cell, a micro cell, a pico cell, a femto cell, etc. These small cells have characteristics of small coverage range and low transmission power, which are applicable for providing a data transmission service with high speed.

The terminal device can be a station (ST) in WLAN, a cellular phone, a cordless phone, a Session Initiation Protocol (SIP) phone, a Wireless Local Loop (WLL) station, a Personal Digital Assistant (PDA) device, a handheld device and a computing device with wireless communication functions, or other processing device connected to a wireless modem, a vehicle-mounted device, a wearable device, a terminal device in a next-generation communication system such as an NR network, or a terminal device in a future evolved Public Land Mobile Network (PLMN) network, a terminal device in the cellular Internet of Things, or a terminal device in the cellular passive Internet of Things, etc.

In the embodiments of the present disclosure, the terminal device may be deployed on land, which includes indoor or outdoor, in handheld, worn or vehicle-mounted; may also be deployed on water (e.g., on a ship); may also be deployed in the air (e.g., on an airplane, a balloon, a satellite).

In the embodiments of the present disclosure, the terminal device may be a mobile phone, a pad, a computer with a wireless transceiving function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, etc.

As an example but not a limitation, in the embodiments of the present disclosure, the terminal device may also be a wearable device. The wearable device, which is also referred to as a wearable smart device, is a generic term for a device that can be worn, into which the daily wear is intelligently designed and developed by applying wearable technologies, such as glasses, gloves, watches, clothing, and shoes, etc. The wearable device is a portable device that is worn directly on the body, or integrated into the user's clothing or accessories. The wearable device is not just a hardware device, but also achieves powerful functions through software supporting, data interaction, and cloud interaction. A generalized wearable smart device includes those with full functions, large size, and entire or partial functions without relying on a smartphone (for example, a smartwatch or smart glasses), as well as, those that only focus on a certain type of application function and needs to be used in conjunction with other devices such as a smartphone (for example, a smart bracelet and smart jewelry for physical sign monitoring).

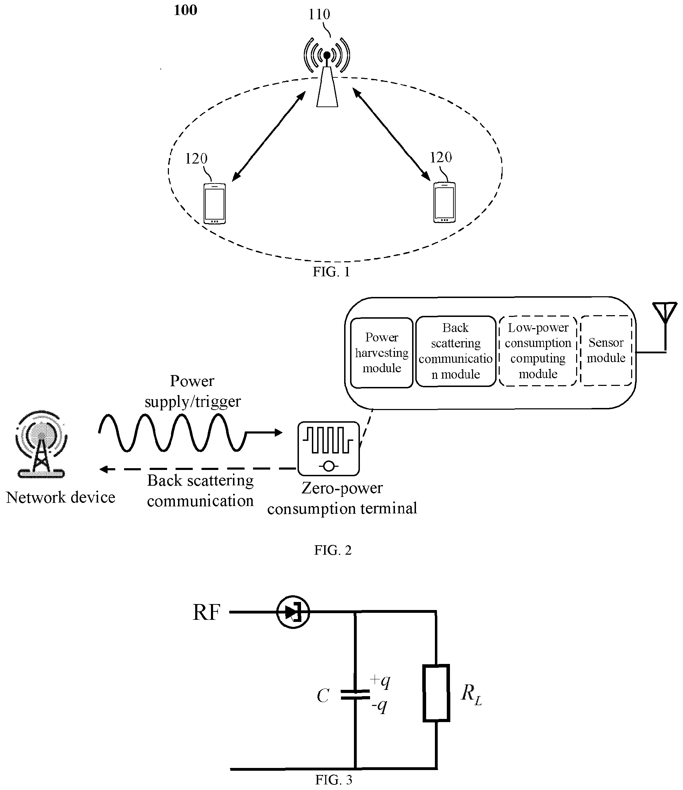

Exemplarily, the communication system 100 applied by the embodiments of the present disclosure is shown in FIG. 1. The communication system 100 may include a network device 110, and the network device 110 may be a device that communicates with a terminal device 120 (also referred to as a communication terminal or a terminal). The network device 110 may provide communication coverage for a specific geographical area and may communicate with a terminal device located within the coverage area.

FIG. 1 exemplarily shows one network device and two terminal devices, and optionally, the communication system 100 may include a plurality of network devices and may include another number of terminal devices within a coverage range of each network device, which is not limited in the embodiments of the present disclosure.

Optionally, the communication system 100 may also include other network entities such as a network controller and a mobility management entity, etc. Which are not limited to the embodiments of the present disclosure.

It should be understood that, in the embodiments of the present disclosure, a device with a communication function in the network/system may be referred to as a communication device. Taking the communication system 100 shown in FIG. 1 as an example, the communication device may include the network device 110 and the terminal devices 120 with communication functions, and the network device 110 and the terminal devices 120 may be the specific devices described above, which will not be repeated herein; the communication device may also include other devices in the communication system 100, such as a network controller, a mobility management entity, and other network entities, which are not limited in the embodiments of the present disclosure.

It should be understood that the terms herein "system" and "network" are often used interchangeably herein. The term herein "and/or" is only an association relationship to describe associated objects, meaning that there may be three kinds of relationships, for example, A and/or B may mean three cases where: A exists alone, both A and B exist, and B exists alone. In addition, a character "/" herein generally means that related objects before and after "/" are in an "or" relationship.

It should be understood that the "indication" and variations thereof mentioned in the embodiments of the present disclosure may be a direct indication, may also be an indirect indication, or may also represent having an association relationship. For example, A indicates B, which may mean that A directly indicates B, for example, B may be acquired by A; may also mean that A indirectly indicates B, for example, A indicates C, and B may be acquired by C; or may also mean that there is an association relationship between A and B.

In the description of the embodiments of the present disclosure, the term "correspondence" and variations thereof may mean that there is a direct correspondence or indirect correspondence between the two, may also mean that there is an associated relationship between the two, or may also mean a relationship of indicating and being indicated or a relationship of configuring and being configured, etc.

In the embodiments of the present disclosure, "predefined" and variations thereof may be implemented by pre-saving corresponding codes, tables or other manners that may be used for indicating related information, in the device (for example, including the terminal device and the network device), and the present disclosure does not limit its specific implementation. For example, the predefined may refer to what is defined in a protocol.

In the embodiments of the present disclosure, the "protocol" may refer to a standard protocol in the field of communication, which may include, for example, an LTE protocol, an NR protocol, and related protocols applied in the future communication system, which is not limited in the present disclosure.

To facilitate the understanding of the technical solutions of the embodiments of the present disclosure, the relevant technologies of the present disclosure are explained.

### I . Zero-power consumption communication

The key technologies of zero-power consumption communication include a power harvesting technology, a back scattering communication technology and a low-power consumption technology.

As shown in FIG. 2, a typical zero-power consumption communication system (e.g., a Radio Frequency Identification (RFID) system) includes a network device (e.g., a reader/writer of an RFID system) and a zero-power consumption device (e.g., an electronic tag). The network device is used to transmit a wireless power supply signal, a downlink communication signal to the zero-power consumption device and receive a back scattering signal from the zero-power consumption device. A basic zero-power consumption device includes a power harvesting module, a back scattering communication module, and a low-power consumption computing module. In addition, the zero-power consumption device may also have a memory or a sensor for storing some basic information (such as object identification) or sensing data such as ambient temperature and ambient humidity.

For example, a power harvesting module may harvest energy carried by radio waves in space (radio waves transmitted by the network device shown in FIG. 2), to drive a low-power consumption computing module of the zero-power consumption device and implement back scattering communication. The zero-power consumption device, after obtaining energy, may receive a control command from the network device and transmit data to the network device based on the back scattering mode and based on the control signaling. The transmitted data may be data stored in the zero-power consumption device itself (for example, an identity or pre-written information, such as a production date, a brand, a manufacturer of the product). The zero-power consumption device may also be loaded with various sensors, so as to report data collected by the various sensors based on a zero-power consumption mechanism.

The key technologies in the zero-power consumption communication are explained below.

### 1. Radio frequency (RF) Power Harvesting

As shown in FIG. 3, the radio frequency power harvesting module harvests electromagnetic wave energy in space based on the principle of electromagnetic induction, and then obtains the energy required to drive zero-power consumption device to operate, such as driving a low-power consumption demodulation and modulation module, a sensor, and memory reading. Therefore, the zero-power consumption device does not require a traditional battery.

### 2. Back scattering communication

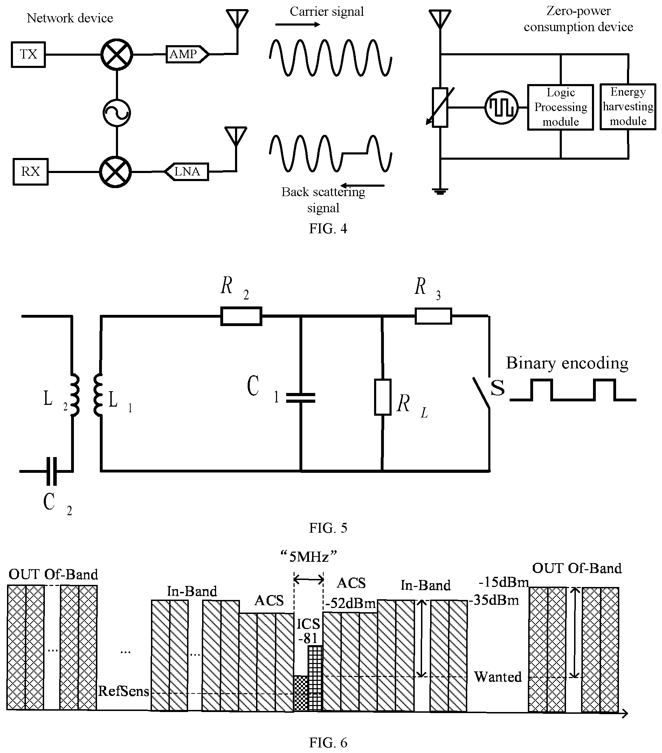

As shown in FIG. 4, the zero-power consumption device receives a carrier signal transmitted from the network device, modulates the carrier signal, loads information to be transmitted and radiates the modulated signal from the antenna. This information transmission process is referred to as back scattering communication. Back scattering and load modulation functions are inseparable. The load modulation adjusts and controls a circuit parameter of an oscillation circuit of the zero-power consumption device according to a rhythm of a data stream, so as to change a parameter such as the magnitude of the impedance of the zero-power consumption device, thereby completing the modulation procedure. The load modulation technology mainly includes two manners: resistance load modulation and capacitance load modulation. In the resistance load modulation, a load is connected in parallel with a resistor, which is switched on or off based on the control of the binary data stream, as shown in FIG. 5. The on and off of the resistor will cause a change in the circuit voltage, thus achieving amplitude shift keying (ASK), that is, the modulation and transmission of the signal is achieved by adjusting the amplitude of the back scattering signal of the zero-power consumption device. Similarly, in the capacitance load modulation, the resonant frequency of the circuit may be changed by switching the capacitor on and off, realizing frequency shift keying (FSK), that is, the modulation and transmission of the signal is achieved by adjusting the operating frequency of the back scattering signal of the zero-power consumption device.

It can be seen that the zero-power consumption device uses load modulation to modulate an incoming signal, thereby realizing the back scattering communication procedure. Therefore, the zero-power consumption device has significant advantages:
(1) the zero-power consumption device does not actively transmit a signal, so a complex radio frequency link, such as a power amplifier (PA), a radio frequency (RF) filter, etc. Is not required ;
(2) there is no need to actively generate a high-frequency signal by the zero-power consumption device, so high-frequency crystal oscillator is not required;
(3) with the help of the back scattering communication, a terminal signal transmission does not need to consume the terminal's own energy.

### 3. Encoding technology

Data transmitted by the zero-power consumption device may be represented as binary "1" and "0" by using different forms of codes. The wireless radio frequency identification system usually uses one of the following encoding methods: Non Return Zero (NRZ) encoding, Manchester encoding, Unipolar RZ encoding, Differential Bi-Phase (DBP) encoding, Differential encoding, pulse interval encoding (PIE), Bi-Phase Space encoding (FM0), Miller encoding and differential encoding, etc. In general terms, different encoding technologies use different pulse signals to represent 0 and 1.

To facilitate the understanding of the embodiments of the present disclosure, a power supply signal, a scheduling signal and a carrier signal related to the zero-power consumption communication are explained.

### 1. Power supply signal

The power supply signal is the power source for the zero-power consumption device to harvest energy.

In terms of supply power supply signal carrier, it may be a base station, a smart phone, a smart gateway, a charging station, a micro base station, etc.

In terms of a frequency band, a frequency band of a radio wave used for power supply may be a low frequency, an intermediate frequency, or a high frequency, etc.

In terms of a waveform, a radio wave used for power supply may be a sine wave, a square wave, a triangle wave, a pulse, a rectangular wave, etc.

In addition, the power supply signal may be a continuous wave or a discontinuous wave (i.e., a certain period of interruption is allowed).

Optionally, the power supply signal may be an existing signal in the 3GPP standard. For example, the power supply signal may be a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), a physical broadcast channel (PBCH), etc, or may also be a WIFI signal or a Bluetooth signal.

Optionally, the power supply signal may also be implemented as a newly-added signal, for example, a newly-added signal dedicated to power supply.

### 2. Trigger signal (or referred to a scheduling signal)

The trigger signal is used to trigger or schedule the zero-power consumption device to transmit data.

In terms of a trigger signal carrier, the signal carrier may be a base station, a smart phone, a smart gateway, etc.

In terms of a frequency band, a radio wave used for triggering or scheduling may be in a low frequency, an intermediate frequency, or a high frequency, etc.

In terms of a waveform, a radio wave used for triggering or scheduling may be a sine wave, a square wave, a triangle wave, a pulse, a rectangular wave, etc.

In addition, the trigger signal may be a continuous wave or a discontinuous wave (i.e., a certain period of interruption is allowed).

Optionally, the trigger signal may be an existing signal in the 3GPP standard, e.g., an SRS, a PUSCH, a PRACH, a PUCCH, a PDCCH, a PDSCH, a PBCH, or a WIFI signal or a Bluetooth signal, etc.

Optionally, the trigger signal may also be implemented as a newly-added signal, such as a newly-added signal dedicated to triggering or scheduling.

### 3. Carrier signal

The carrier signal is used by the zero-power consumption device to generate a back scattering signal. For example, the zero-power consumption device may modulate the received carrier signal according to the information to be transmitted to form a back scattering signal.

In terms of a carrier signal carrier, the signal carrier may be a base station, a smart phone, a smart gateway, etc.

In terms of a frequency band, a radio wave used for carrier signals may be in a low frequency, an intermediate frequency, or a high frequency, etc.

In terms of a waveform, a radio wave used for carrier signals may be a sine wave, a square wave, a triangle wave, a pulse, a rectangular wave, etc.

In addition, the carrier signal may be a continuous wave or a discontinuous wave (i.e., a certain period of interruption is allowed).

Optionally, the carrier signal may be an existing signal in the 3GPP standard, e.g., an SRS, a PUSCH, a PRACH, a PUCCH, a PDCCH, a PDSCH, a PBCH, or a WIFI signal or a Bluetooth signal, etc.

Optionally, the carrier signal may also be implemented as a newly-added signal, for example, a newly-added carrier signal dedicated to generating a back scattering signal.

It should be noted that in the embodiments of the present disclosure, the power supply signal, the scheduling signal and the carrier signal may be a same signal, or may also be different signals. For example, the power supply signal may be used as a carrier signal, and the scheduling signal may also be used as a carrier signal, etc.

In some scenarios, based on energy sources and usages of zero-power consumption devices, the zero-power consumption devices may be classified into the following types.

### 1. Passive zero-power consumption device

The zero-power consumption device (such as an electronic tag of the RFID system) does not need an internal battery, and when the zero-power consumption device approaches a network device (such as a reader/writer of the RFID system), the zero-power consumption device is within a near field range formed by antenna radiation of the network device. Therefore, an antenna of the zero-power consumption device generates an induced current through electromagnetic induction, and the induced current drives the low-power consumption chip circuit of the zero-power consumption device. Tasks such as demodulation of a forward link signal and modulation of a backward link signal (or referred to as a reflection link), etc. are implemented. For the back scattering link, the zero-power consumption device uses the Back scattering implementation to transmit a signal.

It can be seen that the passive zero-power consumption device does not need an internal battery to drive either the forward link or the backward link, and is a truly zero-power consumption device.

The passive zero-power consumption device does not need a battery, and a radio frequency circuit and a baseband circuit of the passive zero-power consumption device both are very simple, for example, do not need a low-noise amplifier (LNA), a power amplifier (PA), a crystal oscillator, an analog-to-digital converter (ADC) and other devices, therefore, the passive zero-power consumption device has many advantages, such as small size, light weight, very cheap price, and long service life, etc.

### 2. Semi-passive zero-power consumption device

The semi-passive zero-power consumption device is not equipped with a conventional battery itself, but may use an RF power harvesting module to harvest radio wave energy, and at the same time, store the harvested energy in an energy storage unit (such as a capacitor). The energy storage unit, after obtaining the energy, may drive the low-power consumption chip circuit of the zero-power consumption device. Tasks such as demodulation of a forward link signal and modulation of a backward link signal, etc. Are implemented. For the back scattering link, the zero-power consumption device uses the back scattering implementation to transmit a signal.

It can be seen that the semi-passive zero-power consumption device does not need an internal battery to drive either the forward link or the backward link. Although the energy stored in the capacitor is used in the operation, the energy comes from the radio energy harvested by the power harvesting module, therefore, the semi-passive zero-power consumption device is also a truly zero-power consumption device.

The semi-passive zero-power consumption device inherits many of advantages of the passive zero-power consumption device, and therefore, has many advantages, such as small size, light weight, very cheap price, and long service life, etc.

### 3. Active zero-power consumption device

The zero-power consumption device used in some scenarios may also be an active zero-power consumption device, this type of terminal may have an internal battery. The battery is used to drive a low-power consumption chip circuit of the zero-power consumption device. Tasks such as demodulation of a forward link signal and modulation of a backward link signal, etc. Are implemented. But for the back scattering link, the zero-power consumption device uses the back scattering implementation to transmit a signal. Therefore, the zero-power consumption of this type of device is mainly reflected in the fact that the transmission of the backward link signal does not need the terminal's own power, but uses the method of back scattering.

### II. Cellular passive Internet of Things

With the increase of 5G industry applications, there are more and more types and application scenarios of connected objects, there will be higher requirements on the cost and power consumption of communication terminals, the application of battery-free, low-cost passive Internet of Things devices becomes a key technology of the cellular IoT, which enriches the types and number of 5G network-linked terminals, and truly implements the Internet of Everything. Herein, the passive Internet of Things device may be based on the zero-power consumption communication technology, such as RFID technology, and extended on this basis, to be applicable for the cellular IoT.

### 3. Coexistence of zero-power consumption devices and traditional terminals

In some scenarios, Narrow Band Internet of Things (NB-IoT) terminals or enhanced Machine Type Communication (eMTC) terminals and traditional terminals in the NR system may coexist in the following three manners: an in-band deployment mode, a guard band deployment mode and an independent deployment mode.

Since the receiver sensitivity of traditional terminals in 4G or 5G systems is much lower than that of zero-power consumption terminals, it is very important to study the coexistence and interference problems between the zero-power consumption communication system and traditional cellular communication network.

Due to the characteristics of zero-power consumption device capability harvesting and back scattering, the coexistence of zero-power consumption communication system and traditional cellular network system is studied, and the most important thing is to analyze the impact of coexistence on the receiver performance of terminals in both systems. As shown in FIG. 6, the metric requirements include in channel sensitivity (ICS), maximum input level, adjacent channel selectivity (ACS), blocking (such as in-band blocking, out-of-band blocking and narrow-band blocking) and spurious response.

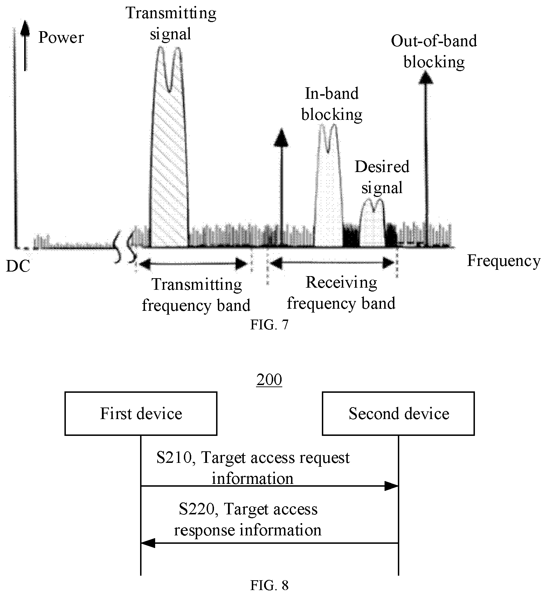

Regardless of whether the zero-power consumption device is deployed in the in-band mode, guard band mode or independent mode, a downlink signal transmitted to the zero-power consumption device or a reflected signal of the zero-power consumption device may fall into the adjacent band or in-band of the traditional terminal, causing adjacent band interference or in-band blocking, as shown in FIG. 7. At this time, the interference signal should satisfy the receiver radio frequency metric requirements of the traditional terminal, otherwise the receiver performance will be reduced, thereby causing the receiver sensitivity to fall back (MSD).

In particular, if the in-band mode is adopted, it is first necessary to avoid co-frequency interference between systems, that is, in-band interference. The input power of wireless energy harvested by a zero-power consumption terminal is generally at least -20dBm. It is necessary to evaluate whether a transmitting signal and a back scattering signal of the energy source will cause co-frequency interference to other 4G/5G terminals on a same frequency band. For example, from the perspective of wireless power supply, the network needs to transmit a stronger signal so that the receiving power of the zero-power consumption terminal is above -20dBm. Such a strong signal may affect the maximum input power (such as -15dBm) of the traditional terminal upon using the in-band deployment. Therefore, it is necessary to assess the impact on the traditional terminal and how to avoid related impacts.

If a zero-power consumption device is deployed together with a traditional terminal, the coexistence problem will be more complicated. It is also necessary to consider the impact of the additional interference caused by signals such as harmonics and intermodulation on the receiver performance of the zero-power consumption device and the traditional terminal. In addition, there are coexistence problems with other WiFi, Bluetooth, Beidou and other systems, which also require more specific analysis based on the actual operating frequency band and mode. If the zero-power consumption device exists in a form of an independent device, only the radio frequency metric requirements of the adjacent band and out-of-band spurious radiation of the transmitter and receiver need to be satisfied.

In the related technologies, a connection of a traditional terminal to the network requires authorization and authentication. After the introduction of the zero-power consumption device, how to perform an access authentication of a zero-power consumption device is an urgent problem to be solved.

In related technologies, a WIFI device may use a Near Field Communication (NFC) technology for proximity authentication, but this manner cannot satisfy the requirements of long distances. For QR code scanning authentication, although it is easy to implement, a lot of manpower and time is required for batch access scenarios. In addition, in a case where a gateway, a WIFI hotspot or a controller is replaced or powered off, how to reconnect a large number of devices to the network is also a problem.

In order to facilitate the understanding of technical solutions of the embodiments of the present disclosure, the technical solutions of the present disclosure are described in detail below through specific embodiments. The above related technologies, as optional solutions, may be arbitrarily combined with the technical solutions of the embodiments of the present disclosure, which all belong to the protection scope of the embodiments of the present disclosure. The embodiments of the present disclosure include at least some of the following contents.

FIG. 8 is a schematic diagram of an access authentication method 200 according to the embodiments of the present disclosure. As shown in FIG. 8, the method 200 includes at least part of the following contents.

In S210, a first device transmits target access request information to a second device.

Correspondingly, the second device receives the target access request information.

In S220, the second device transmits target access response information to the first device.

Correspondingly, the first device receives the target access response information.

In the embodiments of the present disclosure, the first device is also referred to as a requesting access device for requesting, a requesting accessor, and the second device is also referred to as an access authentication device, an accessee, etc.

It should be understood that the embodiments of the present disclosure do not limit the power supply manners of the first device and the second device. For example, the first device may have an energy storage unit to supply its own energy, or the first device may also obtain energy through power harvesting. For example, the second device may have an energy storage unit to supply its own energy, or the second device may also obtain energy through power harvesting.

In some embodiments, the target access request information is used for the first device to access the second device.

In some embodiments, the target access response message is used to indicate a response of the second device to an access request of the first device.

In some embodiments, the first device may support back scattering communication and/or active transmission communication.

That is, the first device supports transmitting a signal in a back scattering mode and/or an active transmission mode.

In some embodiments, the second device may support back scattering communication and/or active transmission communication.

That is, the second device supports transmitting a signal in a back scattering mode and/or an active transmission mode.

In the embodiments of the present disclosure, at least one of the first device or the second device supports back scattering communication.

Case 1: the first device supports back scattering communication, and the second device does not support back scattering communication.

Case 2: the first device does not support back scattering communication, and the second device supports back scattering communication.

Case 3: the first device supports back scattering communication, and the second device supports back scattering communication.

In some embodiments, when a device (e.g., a first device or a second device) supports back scattering communication, the device may include a functional module for back scattering communication, such as a back scattering transmitter. Optionally, the functional module for back scattering communication may be provided by the device itself, or may be installed later, which is not limited in the present disclosure. Optionally, the functional module for back scattering communication may be provided with an Ambient enabled Internet of Things (A-IOT) tag.

In some embodiments, when a device (e.g., a first device or a second device) supports active transmission communication, the device may have a functional module for actively transmitting a signal, such as a PA, an LNA, a local oscillator, a crystal oscillator, a transistor or a tunnel diode.

Optionally, the above functional module for active transmission communication may also be used to amplify a back scattering signal in some cases to increase the communication distance of the back scattering signal. For example, the back scattering signal is amplified by the PA or the LNA (e.g., reverse amplification), the transistor or the tunnel diode to increase the communication distance of the back scattering signal.

In some embodiments, when a device supports active transmission communication and back scattering communication, the device may include a functional module for back scattering communication and a functional module for active transmission communication, such as a functional module with a master transmitter and a back scattering transmitter. Optionally, the back scattering transmitter supports transmitting a signal in a back scattering mode. The back scattering transmitter cannot transmit the signal autonomously, but needs to modulate and reflect the received signal to carry the information to be transmitted.

In some embodiments, the master transmitter and the back scattering transmitter may be independent modules, or the master transmitter and the back scattering transmitter may be considered to include different functional modules in the device. For example, the master transmitter may include functional modules such as a power amplifier, a local oscillator, a crystal oscillator, and an LNA, while the back scattering transmitter may not include the above functional modules.

In other words, different signal transmitting modes may correspond to whether a specific functional module of the transmitter is enabled. Optionally, the specific functional module may include a functional module for actively transmitting a signal, such as a power amplifier, a local oscillator, a crystal oscillator, an LNA, etc. For example, for the back scattering mode or active transmission mode, one difference is whether a PA is used to amplify a signal. Herein, the usage of PA corresponds to the active transmission mode, which requires additional power consumption to achieve a longer communication distance. A PA is not used and only a carrier signal is backscattered, which corresponds to the back scattering mode. For another example, whether to use the local oscillator may also correspond to different signal transmitting modes. Herein, the active transmission mode generates a transmission signal through the local oscillator of the transmitter and modulates the transmission signal, which does not rely on an external carrier signal. The back scattering mode does not use the local oscillator of the transmitter to generate the transmission signal, but relies on an external carrier signal and performs modulation.

In some embodiments, the first device may have the following structural units:
a low-power consumption receiver (or a low complexity receiver), a back scattering transmitter.

In some other embodiments, the first device may have the following structural units:
a low-power consumption receiver (or a low complexity receiver), a back scattering transmitter, a master receiver (or a traditional receiver), a master transmitter (or a traditional transmitter).

In some embodiments, the second device may have the following structural units:
a low-power consumption receiver (or a low complexity receiver), a back scattering transmitter.

In some other embodiments, the second device may have the following structural units:
a low-power consumption receiver (or a low complexity receiver), a back scattering transmitter, a master receiver (or a traditional receiver), a master transmitter (or a traditional transmitter).

Optionally, the low-power consumption receiver and the back scattering transmitter may be independent structural units, or may be attached to the master receiver and the master transmitter.

It should be understood that the embodiments of the present disclosure do not limit the specific implementations of the first device and the second device.

In some embodiments, the first device may be a zero-power consumption device, a terminal device supporting back scattering communication, or may be a traditional terminal.

In some embodiments, the second device may be a zero-power consumption device, a network device supporting back scattering communication, or may be a traditional network device.

As an example but not a limitation, the first device may include but is not limited to at least one of:
a mobile phone, a tablet, a headphone, a mouse, a pair of AR glasses, a pair of VR glasses, or a drone.

As an example but not a limitation, the second device may include but is not limited to at least one of:
a base station, an AP, a router, a remote control, or a smart key.

It should be noted that the present disclosure does not limit the specific classification manner of the zero-power consumption device. For example, the zero-power consumption device may be classified based on characteristics such as a device complexity, a power supply mode, a communication mode, a modulation mode, etc. For example, a zero-power consumption device may be a terminal having at least one of the following characteristics: a low complexity, support for environmental power supply, support for power supply of other devices, back scattering, a new waveform (or a simple waveform), and low complexity modulation manners such as amplitude shift keying (ASK), frequency shift keying (FSK), phase shift keying (PSK), or on-off keying (OOK).

It should be understood that the embodiments of the present disclosure do not limit the naming of the zero-power consumption device. For example, the zero-power consumption device may also be referred to as a low-power consumption device, an ambient power enabled (AMP) device, a power harvesting-based device, etc.

It should be understood that when information is transmitted through a back scattering mode, the embodiments of the present disclosure do not limit the specific source of the carrier signal used for back scattering. For example, a nearest signal may be used as a carrier signal for the back scattering, or a dedicated carrier signal may be used for back scattering, or a radio signal in the environment may be used as a carrier signal, which is not limited in the present disclosure.

In some embodiments, the target access request information is transmitted through a back scattering mode, or the target access request information is transmitted through a back scattering mode and an active transmission mode.

Optionally, in a case where the first device supports back scattering communication, or in a case where the first device supports back scattering communication and active transmission communication, the target access request information may be transmitted through a back scattering mode.

Optionally, in a case where the first device supports back scattering communication and active transmission communication, the target access request information is transmitted through a back scattering mode and an active transmission mode.

In some embodiments, the target access request information being transmitted by the back scattering mode and the active transmission mode, may include:
different parts (or different bits) of the target access request information being transmitted through the back scattering mode and the active transmission mode, respectively.

For example, a first part of the target access request information is transmitted through the back scattering mode, and a second part of the target access request information is transmitted through the active transmission mode.

In some other embodiments, the target access request information may also be transmitted though the active transmission mode.

For example, in a case where the first device supports active transmission communication, the first device may transmit the target access request information through the active transmission mode.

In some embodiments, the target access response information is transmitted through a back scattering mode, or the target access response information is transmitted through a back scattering mode and an active transmission mode.

Optionally, in a case where the second device supports back scattering communication, or in a case where the second device supports back scattering communication and active transmission communication, the target access response information may be transmitted through the back scattering mode.

Optionally, in a case where the second device supports back scattering communication and active transmission communication, the target access response information is transmitted through a back scattering mode and an active transmission mode.

In some embodiments, the target access response information being transmitted through the back scattering mode and the active transmission mode, may include:
different parts (or different bits) of the target access response information being transmitted through the back scattering mode and the active transmission mode, respectively.

For example, a first part of the target access response information is transmitted through the back scattering mode, and a second part of the target access response information is transmitted through the active transmission mode.

In some other embodiments, the target access response information may also be transmitted though the active transmission mode.

For example, in a case where the second device supports active transmission communication, the second device may transmit the target access response information through the active transmission mode.

In summary, the target access request information and the target access response information may be transmitted through the following modes.

### For case 1:

Manner 1: the target access request information may be transmitted through a back scattering mode, or the target access request information may be transmitted through a back scattering mode and an active transmission mode, and the target access response information may be transmitted through an active transmission mode.

### For case 2:

Manner 2: the target access request information may be transmitted through an active transmission mode, the target access response information may be transmitted through a back scattering mode, or the target access response information may be transmitted through a back scattering mode and an active transmission mode.

### For case 3:

Manner 3-1: the target access request information may be transmitted through a back scattering mode, or the target access request information may be transmitted through a back scattering mode and an active transmission mode; the target access response information may be transmitted through a back scattering mode, or the target access response information may be transmitted through a back scattering mode and an active transmission mode.

Manner 3-2: the target access request information may be transmitted through a back scattering mode, or the target access request information may be transmitted through a back scattering mode and an active transmission mode; the target access response information may be transmitted through an active transmission mode.

Manner 3-3: the target access request information may be transmitted through an active transmission mode; the target access response information may be transmitted through a back scattering mode, or the target access response information may be transmitted through a back scattering mode and an active transmission mode.

Therefore, in the embodiments of the present disclosure, in a case where an access request device supports back scattering communication, the access request device at least sends access request information through a back scattering mode. Compared with NFC proximity authentication, it has the advantage of longer distance communication. Compared with QR code scanning authentication, it has the advantage of convenient operation. In a case where an access authentication device supports back scattering communication, the access authentication device at least sends access response information through a back scattering mode. In this way, in a case where the access authentication device is powered off, a back scattering communication module of the access authentication device may be used to assist the access request device in re-entering the network.

In some embodiments, the target access response information may be transmitted on a specific frequency band.

Optionally, the specific frequency band may be a frequency band used for back scattering communication, or, a dedicated frequency band for back scattering communication, or an operating frequency band of the first device.

It should be understood that in the embodiments of the present disclosure, the target access request information may include part or all of information transmitted from an access request device to an access authentication device during an access authentication procedure, and the target access response information may include part or all of information transmitted from the access authentication device to the access request device during the access authentication procedure, which is not limited in the present disclosure.

In some embodiments, the target access request information includes at least one of:
first access request information, where the first access request information is used to request access to the second device; or
second access request information, where the second access request information is used to respond to inquiry information of the second device, and the inquiry information is response information of the first access request information.

In some embodiments, the first access request information and the second access request information are transmitted through a same transmitting mode.

For example, in a case where the first device only supports back scattering communication, the first access request information and the second access request information are both transmitted through a back scattering mode.

For example, in a case where the first device supports back scattering communication and active transmission communication, the first access request information and the second access request information are both transmitted through a back scattering mode, or transmitted through a back scattering mode and an active transmission mode.

For example, in a case where the first device only supports active transmission communication, the first access request information and the second access request information are both transmitted through an active transmission mode.

In some embodiments, the first access request information and the second access request information are transmitted through different transmitting modes.

For example, in a case where the first device supports back scattering communication and active transmission communication, the first access request information and the second access request information may be transmitted through the following three modes:
1. one of the first access request information and the second access request information is transmitted through a back scattering mode, and the other of the first access request information and the second access request information is transmitted through an active transmission mode;
2. one of the first access request information and the second access request information is transmitted through a back scattering mode, and the other of the first access request information and the second access request information is transmitted through an active transmission mode and a back scattering mode;
3. one of the first access request information and the second access request information is transmitted through an active transmission mode, and the other of the first access request information and the second access request information is transmitted through an active transmission mode and a back scattering mode.

In some embodiments, the target access response information includes at least one of:
inquiry information of the second device; or
access authentication result information.

In some embodiments, the inquiry information and access authentication result information of the second device are transmitted through a same transmitting mode.

For example, in a case where the second device only supports back scattering communication, the inquiry information and access authentication result information of the second device are both transmitted through a back scattering mode.

For example, in a case where the second device supports back scattering communication and active transmission communication, the inquiry information and access authentication result information of the second device are both transmitted through a back scattering mode, or transmitted through a back scattering mode and an active transmission mode.

For example, in a case where the second device only supports active transmission communication, the inquiry information and access authentication result information of the second device are both transmitted through an active transmission mode.

In some embodiments, the inquiry information and access authentication result information of the second device are transmitted through different transmitting modes.

For example, in a case where the second device supports back scattering communication and active transmission communication, there are three modes to transmit the inquiry information and access authentication result information of the second device as follows:
1. one of the inquiry information and the access authentication result information of the second device is transmitted through a back scattering mode, and the other of the inquiry information and the access authentication result information of the second device is transmitted through an active transmission mode;
2. one of the inquiry information and the access authentication result information of the second device is transmitted through a back scattering mode, and the other of the inquiry information and the access authentication result information of the second device is transmitted through an active transmission mode and a back scattering mode;
3. one of the inquiry information and the access authentication result information of the second device is transmitted through an active transmission mode, and the other of the inquiry information and the access authentication result information of the second device is transmitted through an active transmission mode and a back scattering mode.

In some embodiments, the first access request information includes at least one of:
identity (ID) information of the first device, or service information (such as a service type, a service priority) requested to be transmitted by the first device.

In some embodiments, the first access request information may be transmitted by a signal in the 3GPP standard, or may be transmitted by a WIFI signal, a Bluetooth signal, etc. Which is not limited in the present disclosure.

Optionally, when the first access request information is transmitted through a back scattering mode, the first device may use a signal in the 3GPP standard, or a WIFI signal or a Bluetooth signal as a carrier signal for back scattering.

In some embodiments, the first access request information is transmitted on a first frequency band.

Optionally, the first frequency band is a common frequency band.

Optionally, the first frequency band is a specific frequency band, e.g., a dedicated frequency band for back scattering communication, or an operating frequency band of the first device.

In some embodiments, the inquiry information of the second device is also referred to as challenge information, pre-access information, access information, or authorization information.

In some embodiments, the inquiry information of the second device includes at least one of:
identity (ID) information of the second device, an inquiry code (or a challenge code), or available access frequency band information.

In some embodiments, the inquiry code may be represented by a specific frequency band or a specific signal.

In some embodiments, the inquiry code may be a specific pseudo-random sequence or a pilot signal.

In some embodiments, the inquiry code may be key-related information, such as an asymmetric key or a symmetric key, or key verification information. Optionally, the key may be a fixed key, a dynamic key or third-party authorization information.

In some embodiments, the available access frequency band information may be used to indicate a frequency band that may be used to transmit a requested service.

In some embodiments, the inquiry information of the second device is transmitted through a specific signal, and the specific signal may be used as a carrier signal of the second access request information.

That is, the second device may transmit a specific signal to the first device, and the specific signal is used to carry the inquiry information of the second device. At the same time, the specific signal is also used as a carrier signal of the second access request information. That is, the first device may backscatter the specific signal to transmit the second access request information.

In some embodiments, the inquiry information of the second device is transmitted through broadcasting, multicasting or unicasting.

For example, in a case where a large number of devices request access, the second device may transmit the inquiry information by broadcasting or multicasting.

For another example, in a case where a small number of devices request access, the second device may transmit the inquiry information in unicasting or multicasting.

In some embodiments, when a plurality of devices request access, the plurality of devices may be multi-access, for example, frequency-division multiplexing (FDM), time-division multiplexing (TDM), or code-division multiplexing (CDM), which is not limited in the present disclosure.

In some embodiments, the inquiry information of the second device is transmitted on a second frequency band.

Optionally, the second frequency band is a common frequency band, or an arbitrary frequency band.

Optionally, the second frequency band is a specific frequency band, e.g., a dedicated frequency band for back scattering communication, an available access frequency band, and an operating frequency band of the first device.

In some embodiments, the second access request information includes at least one of:
identity information of the first device, to-be-transmitted service information (for example, a service type, a service priority) requested by the first device, key-related information determined according to the inquiry information of the second device, or identity (ID) information of the second device.

Optionally, the key-related information determined according to the inquiry information of the second device may refer to:
a key or key verification information obtained from the inquiry information from the second device, or
a key or key verification information decrypted according to the inquiry information of the second device.

In some embodiments, the second access request information is transmitted on a third frequency band.

Optionally, the third frequency band is a specific frequency band, e.g., a dedicated frequency band for back scattering communication, an available access frequency band, and an operating frequency band of the first device.

In some embodiments, the second access request information and the inquiry information of the second device are transmitted on different frequency bands, or are transmitted on a same frequency band. That is, the second frequency band and the third frequency band may be the same or different.

In some embodiments, the access authentication result information is transmitted on a fourth frequency band.

Optionally, the fourth frequency band is a specific frequency band, e.g., a dedicated frequency band for back scattering communication, an available access frequency band, and an operating frequency band of the first device.

In some embodiments, the access authentication result information may be used to indicate that the access is completed. Optionally, the access authentication result information may also be used to indicate a permitted (or available) frequency band and/or occupation time information of the available frequency band, etc.

It should be understood that in the embodiments of the present disclosure, the frequency band may also be replaced by a frequency channel, a channel, a carrier, etc.

It should be noted that the embodiments of the present disclosure do not limit a configuration manner of a dedicated frequency band for back scattering communication. For example, a first frequency band and a second frequency band may be configured, where the first frequency band is used to transmit an uplink signal by using a back scattering mode, and the second frequency band is used to transmit a downlink signal by using a back scattering mode. Optionally, the first frequency band may be a supplementary uplink (SUL) frequency band, and the second frequency band may be a supplementary downlink (SDL) frequency band. Alternatively, corresponding frequency bands for back scattering communication (for example, a back scattering communication frequency band corresponding to an FDD mode, a back scattering communication frequency band corresponding to a TDD mode, or a back scattering communication frequency band corresponding to a full duplex mode) may be configured according to different multiple access modes or duplex modes. The access authentication method according to the embodiments of the present disclosure is described below in conjunction with the aforementioned case 1, case 2 and case 3.

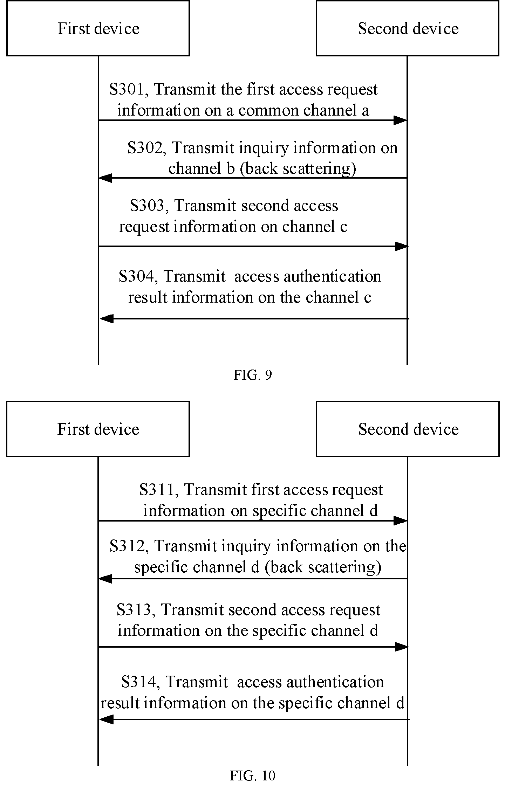

FIG. 9 is a schematic interaction diagram of an access authentication method according to the embodiments of the present disclosure. In an example of FIG. 9, the second device supports back scattering communication, and the first device does not support back scattering communication, which corresponds to the aforementioned case 2.

Optionally, in the example, the operating frequency band of the first device may include channel a, channel b, and channel c, and the operating frequency band of the second device may include channel a, channel b, and channel c.

As shown in FIG. 9, the following steps may be included.

In S301, a first device transmitts first access request information to a second device.

Optionally, the first device may transmit the first access request information on a common channel (e.g., channel a).

Optionally, the first access request information may be considered as a trigger signal for access authentication.

Optionally, the first access request information may be used to trigger the second device to transmit access feedback information.

Optionally, the first access request information may be transmitted by a WIFI signal, or transmitted by a Bluetooth signal, or transmitted by a signal in the 3GPP standard, which is not limited in the present disclosure.

Optionally, the first access request information is transmitted based on a first connection between the first device and the second device.

Optionally, the first connection may be a WIFI connection, a Bluetooth connection, or a connection in the 3GPP standard.

Optionally, after the access authentication is successful, a second connection is established between the first device and the second device, where the first connection and the second connection may be the same or different.

In S302, a second device transmits inquiry information through a back scattering mode.

For example, after receiving the first access request information, the second device may interpret the first access request information to obtain an access request of a first device. Furthermore, the inquiry information may be transmitted through a back scattering mode.

Optionally, the inquiry information is transmitted on the channel b. For example, in a case where the channel a is occupied, the channel b is used to transmit the inquiry information.

Optionally, the inquiry information may also be transmitted on the channel a.

Optionally, the inquiry information may include identity information of the second device, key-related information, available channel information (e.g., including channel c), etc.

In S303, the first device transmits second access request information.

Specifically, after receiving the access feedback information of the second device, the first device requests access to the first device for the second time.

Optionally, the second access request information is transmitted on channel c.

Optionally, the second access request information may be transmitted by a WIFI signal, or transmitted by a Bluetooth signal, or transmitted by a signal in the 3GPP standard, which is not limited in the present disclosure.

Optionally, the second access request information includes at least one of:
the identity information of the first device, the to-be-transmitted service information requested by the first device, key-related information, or the identity information of the second device.

In S304, the second device transmits access authentication result information.

Optionally, the access authentication result information may be transmitted on channel c.

Optionally, the access authentication result information may also be transmitted on channel X, where the channel X belongs to an operating frequency band of the first device and the second device.

Optionally, the second device may perform access authentication on the first device according to information in the second access request information, and further feed back an access authentication result.

Furthermore, the first device and the second device may perform service transmission on the channel c.

FIG. 10 is a schematic interaction diagram of another access authentication method according to the embodiments of the present disclosure. In an example of FIG. 10, the second device supports back scattering communication, and the first device does not support back scattering communication, which corresponds to the aforementioned case 2.

Optionally, in the example, the operating frequency band of the first device may include channel d, and the operating frequency band of the second device may include channel d.

As shown in FIG. 10, the following steps may be included.

In S311, a first device transmits first access request information to a second device.

Optionally, the first device may transmit the first access request information on a specific channel (e.g., channel d).

Alternatively, the specific channel d may be a dedicated channel for back scattering communications.

Optionally, the first access request information may be considered as a trigger signal for access authentication.

Optionally, the first access request information may be used to trigger the second device to transmit access feedback information.

Optionally, the first access request information may be transmitted by a WIFI signal, or transmitted by a Bluetooth signal, or transmitted by a signal in the 3GPP standard, which is not limited in the present disclosure.

Optionally, the first access request information is transmitted based on a first connection between the first device and the second device.

Optionally, the first connection may be a WIFI connection, a Bluetooth connection, or a connection in the 3GPP standard.

Optionally, after the access authentication is successful, a second connection is established between the first device and the second device, where the first connection and the second connection may be the same or different.

In S312, a second device transmits inquiry information through a back scattering mode.

For example, after receiving the first access request information, the second device may interpret the first access request information to obtain an access request of a first device. Furthermore, the inquiry information may be transmitted through a back scattering mode.

Optionally, the inquiry information is transmitted on channel d.

Optionally, the inquiry information may include identity information of the second device, key-related information, available channel information (e.g., channel d), etc.

In S313, the first device transmits second access request information.

Specifically, after receiving the access feedback information of the second device, the first device requests access to the first device for the second time.

Optionally, the second access request information is transmitted on the channel d.

Optionally, the second access request information may be transmitted by a WIFI signal, or transmitted by a Bluetooth signal, or transmitted by a signal in the 3GPP standard, which is not limited in the present disclosure.

Optionally, the second access request information includes at least one of:
the identity information of the first device, the to-be-transmitted service information requested by the first device, key-related information, or the identity information of the second device.

In S314, the second device transmits access authentication result information.

Optionally, the access authentication result information may be transmitted on frequency band d.

Optionally, the second device may perform access authentication on the first device according to information in the second access request information, and further feed back an access authentication result.

Furthermore, the first device and the second device may perform service transmission on the channel d.

It should be understood that FIG. 9 and FIG.10 only use the example of the inquiry information of the second device being transmitted through a back scattering mode for explanation. In other embodiments, the access authentication result information may also be transmitted through a back scattering mode, or the inquiry information is transmitted through an active transmission mode and the access authentication result information is transmitted through a back scattering mode, or the above back scattering mode may also be replaced by a back scattering mode and an active transmission mode.

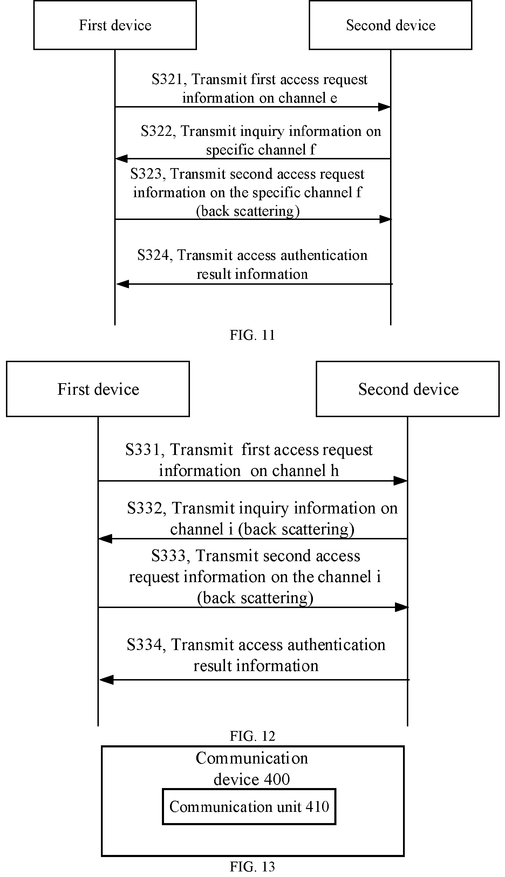

FIG. 11 is a schematic interaction diagram of another access authentication method according to the embodiments of the present disclosure. In an example of FIG. 11, the first device supports back scattering communication, and the second device does not support back scattering communication, which corresponds to the aforementioned case 1.

Optionally, in the example, the operating frequency band of the first device may include channel e, channel f, and channel g, and the operating frequency band of the second device may include channel e, channel f, and channel g.

As shown in FIG. 11, the following steps may be included.

In S321, a first device transmits first access request information to a second device.

Optionally, the first access request information may be transmitted on the channel e.

Optionally, the first access request information may be considered as a trigger signal for access authentication.

Optionally, the first access request information may be used to trigger the second device to transmit access feedback information.

Optionally, the first access request information may be transmitted by a WIFI signal, or transmitted by a Bluetooth signal, or transmitted by a signal in the 3GPP standard, which is not limited in the present disclosure.

Optionally, the first access request information is transmitted based on a first connection between the first device and the second device.

Optionally, the first connection may be a WIFI connection, a Bluetooth connection, or a connection in the 3GPP standard.

Optionally, after the access authentication is successful, a second connection is established between the first device and the second device, where the first connection and the second connection may be the same or different.

In S322, the second device transmits inquiry information.

Specifically, after receiving first access request information, the second device may interpret the first access request information to obtain an access request of a first device. Further, the inquiry information may be transmitted.

Optionally, the inquiry information is transmitted on a specific channel.

Optionally, the inquiry information is transmitted on the channel f.

Optionally, the inquiry information may include identity information of the second device, key-related information, available channel information (e.g., channel g and channel e), etc.

Optionally, the inquiry information may be transmitted by broadcasting or multicasting.

For example, in a case where a large number of devices request access, the second device broadcasts or multicasts access authorization information (such as key information) on a specific channel, or transmits a specific signal to indicate the device requesting access to be inquired.

Optionally, the specific channel may be an operating channel of the first device, or a dedicated channel for back scattering communication.

In S323, the first device transmits second access request information.

For example, after receiving feedback information or receiving a specific signal, from the second device on a specific frequency band, the first device sends the second access request information through a back scattering mode.

Optionally, the second access request information may be transmitted through the back scattering mode by using the signal in step S322 as a carrier signal, which is not limited in the present disclosure.

Optionally, the second access request information may be transmitted on the channel f.

Optionally, the second access request information may also be transmitted on the channel e.

Optionally, the second access request information includes at least one of:
the identity information of the first device, the to-be-transmitted service information requested by the first device, key-related information, or the identity information of the second device.

In S324, the second device transmits access authentication result information.

Optionally, after receiving the second access request information of the first device, the second device may add the identity information of the first device to a whitelist, and then, a device corresponding to the identity information performs password-free access or access in a whitelist manner. Further, the access authentication result is fed back.

Optionally, the access authentication result information may be transmitted on frequency band g or channel e or channel f.

Furthermore, the first device and the second device may perform service transmission on the channel g or the channel e.

It should be understood that FIG. 11 only use the example of the second access request information being transmitted through a back scattering mode for explanation. In other embodiments, the first access request information may also be transmitted through a back scattering mode, or the second access request information is transmitted through an active transmission mode and the first access request information is transmitted through a back scattering mode, or the above back scattering mode may also be replaced by a back scattering mode and an active transmission mode.

FIG. 12 is a schematic interaction diagram of yet another access authentication method according to the embodiments of the present disclosure. In the example of FIG. 12, both the first device and the second device support back scattering communication, which corresponds to the aforementioned case 3.

Optionally, in the example, the operating frequency band of the first device may include channel h, channel i, and channel j, and the operating frequency band of the second device may include channel h, channel i, and channel j.

As shown in FIG. 12, the following steps may be included.

In S331, a first device transmits first access request information to a second device.

Optionally, the first device may transmit the first access request information on the channel h.

Optionally, the channel h may be a dedicated channel for back scattering communication.

Optionally, the first access request information may be considered as a trigger signal for access authentication.

Optionally, the first access request information may be used to trigger the second device to transmit access feedback information.

Optionally, the first access request information may be transmitted by a WIFI signal, or transmitted by a Bluetooth signal, or transmitted by a signal in the 3GPP standard, which is not limited in the present disclosure.

Optionally, the first access request information is transmitted based on a first connection between the first device and the second device.

Optionally, the first connection may be a WIFI connection, a Bluetooth connection, or a connection in the 3GPP standard.

Optionally, after the access authentication is successful, a second connection is established between the first device and the second device, where the first connection and the second connection may be the same or different.

In S332, the second device transmits inquiry information.

For example, after receiving the first access request information, the second device may interpret the first access request information to obtain an access request of a first device. Furthermore, the inquiry information may be transmitted through a back scattering mode. For example, the signal in S331 may be used as a carrier signal for backscattering to transmit inquiry information.

Optionally, the inquiry information is transmitted on a specific channel (e.g., channel i).

Optionally, the channel i may be a dedicated channel for back scattering communication.

Optionally, the channel h and the channel i may be the same.

Optionally, the inquiry information may include identity information of the second device, key-related information, available channel information (e.g., channel i and channel j), and etc.

Optionally, the inquiry information may be transmitted by broadcasting or multicasting.

For example, in a case where a large number of devices request access, the second device broadcasts or multicasts access authorization information (such as key information) on a specific channel, or transmits a specific signal to indicate the device requesting access to be inquired.

In S333, the first device transmits second access request information.

For example, after receiving feedback information or receiving a specific signal, from the second device on a specific frequency band, the first device sends the second access request information through a back scattering mode.

Optionally, the second access request information may be transmitted by using a signal in step S322 as a carrier signal, which is not limited in the present disclosure.

Optionally, the second access request information includes at least one of:
the identity information of the first device, the to-be-transmitted service information requested by the first device, key-related information, or the identity information of the second device.

Optionally, the second access request information is transmitted on the channel i.

In S334, the second device transmits access authentication result information.

Optionally, after receiving the second access request information of the first device, the second device may add the identity information of the first device to a whitelist, and a device corresponding to the identity information performs password-free access or access in a whitelist manner. Further, the access authentication result is fed back. Optionally, the access authentication result information may be transmitted on a frequency band j. Optionally, the channel j may be an available access channel.

Optionally, the access authentication result information may be transmitted on a frequency band i. Optionally, the channel i may be a dedicated channel for back scattering communication.

Optionally, the access authentication result information may be transmitted on a frequency band h. Optionally, the channel h may be a dedicated channel for back scattering communication. Furthermore, the first device and the second device may perform service transmission on channel i or channel j.

It should be understood that FIG. 12 only uses the example of the inquiry information and the second access request information of the second device being transmitted through a back scattering mode for explanation. In other embodiments, the first access request information and/or the access authentication result information may also be transmitted through a back scattering mode, or the inquiry information and the second access request information of the second device are transmitted through an active transmission mode, and the first access request information and the access authentication result information are transmitted through a back scattering mode, or the above back scattering mode may also be replaced by a back scattering mode and an active transmission mode.

In summary, in the embodiments of the present disclosure, in the access authentication, a device supporting back scattering communication may use a back scattering mode to transmit access authentication related information (such as the aforementioned target access request information, and target access response information). Compared with NFC proximity authentication, it has the advantage of longer-distance communication. Compared with QR code scanning authentication, it does not require a dynamic password and has the advantage of easy operation.

In some scenarios, an access authentication device supporting back scattering communication may transmit access authentication related information to an access request device by a back scattering communication module when power is off, thereby assisting the access request device in re-entering the network.

In some implementations, a device to be accessed may transmit information required for access verification, such as ID information, service information, and/or available channel information, by a specific channel.

In some implementations, the access request information (e.g., the aforementioned first access request information, and second access request information) may be transmitted on a common access channel (i.e., a dedicated channel for non-back scattering communication), or may be transmitted on a dedicated channel for back scattering communication.

In some implementations, the access request information (such as the aforementioned first access request information and second access request information) may be transmitted through an active transmission mode, or may be transmitted through a back scattering mode, or may be transmitted through a back scattering mode and an active transmission mode.

In some implementations, the access response information (e.g., the inquiry information or access authentication result information) may be transmitted on a dedicated channel for back scattering communication, or may also be transmitted on other available access channels.

In some implementations, the access response information (e.g., the inquiry information or access authentication result information) may be transmitted through an active transmission mode, or transmitted through a back scattering mode, or transmitted through a back scattering mode and an active transmission mode.

The method embodiments of the present disclosure are described in detail above with reference to FIG. 8 to FIG. 12, and apparatus embodiments of the present disclosure are described in detail below with reference to FIG. 13 to FIG. 17. It should be understood that the apparatus embodiments and the method embodiments correspond to each other and the similar description may refer to the method embodiments.

FIG. 13 shows a schematic block diagram of a communication device 400 according to the embodiments of the present disclosure. As shown in FIG. 13, the communication device 400 includes:
a communication unit 410, configured to transmit target access request information to a second device, where the target access request information is transmitted through a back scattering mode, or the target access request information is transmitted through a back scattering mode and an active transmission mode, and the target access request information is used for the communication device to access the second device.

In some embodiments, the target access request information includes at least one of:
first access request information, where the first access request information is used to request access to the second device; or
second access request information, where the second access request information is used to respond to inquiry information of the second device, and the inquiry information is response information of the first access request information.

In some embodiments, the first access request information includes at least one of:
identity information of the communication device, or to-be-transmitted service information requested by the communication device.

In some embodiments, the inquiry information of the second device includes at least one of: key-related information, available access frequency band information, or identity information of the second device.

In some embodiments, the inquiry information of the second device is transmitted through broadcasting, multicasting or unicasting.

In some embodiments, the inquiry information of the second device is transmitted through a specific signal, and the specific signal is used as a carrier signal of the second access request information.

In some embodiments, the second access request information includes at least one of:
identity information of the communication device, to-be-transmitted service information requested by the communication device, key-related information determined according to the inquiry information of the second device, or identity information of the second device.

In some embodiments, the first access request information is transmitted on a first frequency band; and/or
the inquiry information of the second device is transmitted on a second frequency band; and/or
the second access request information is transmitted on a third frequency band.

In some embodiments, the first frequency band is a common frequency band; or
the first frequency band is an operating frequency band of the first device; or
the first frequency band is a dedicated frequency band for back scattering communication.

In some embodiments, the second frequency band is an operating frequency band of the first device; or
the second frequency band is an available access frequency band, or
the second frequency band is an arbitrary frequency band.

In some embodiments, the third frequency band is an available access frequency band; or
the third frequency band is a dedicated frequency band for back scattering communication.

In some embodiments, the inquiry information of the second device is transmitted through an active transmission mode; or
the inquiry information of the second device is transmitted through a back scattering mode; or
the inquiry information of the second device is transmitted through a back scattering mode and an active transmission mode.

In some embodiments, the communication unit 410 is further configured to: receive access authentication result information transmitted from the second device.

In some embodiments, the access authentication result information is transmitted on a fourth frequency band, and the fourth frequency band is an available access frequency band or a dedicated frequency band for back scattering communication.

In some embodiments, the access authentication result information is transmitted through an active transmission mode; or
the access authentication result information is transmitted through a back scattering mode; or
the access authentication result information is transmitted through a back scattering mode and an active transmission mode.

In some embodiments, the communication device includes a back scattering transmitter, and the back scattering transmitter is used to transmit a signal in a back scattering mode.

In some embodiments, the communication device includes a back scattering transmitter and a master transmitter, the back scattering transmitter is used to transmit a signal in a back scattering mode, and the master transmitter is used to transmit a signal in an active transmission mode.

Optionally, in some embodiments, the above communication unit may be a communication interface or a transceiver, or an input and output interfaces of a communication chip or a system-on-chip. The above processing unit may be one or more processors.

It should be understood that the communication device 400 according to the embodiments of the present disclosure may correspond to the first device in the method embodiments of the present disclosure, and the above and other operations and/or functions of various units in the communication device 400 are respectively to implement the corresponding procedure of the first device in the method embodiments shown in FIG. 8 to FIG. 12, which will not be repeated herein for the sake of brevity.

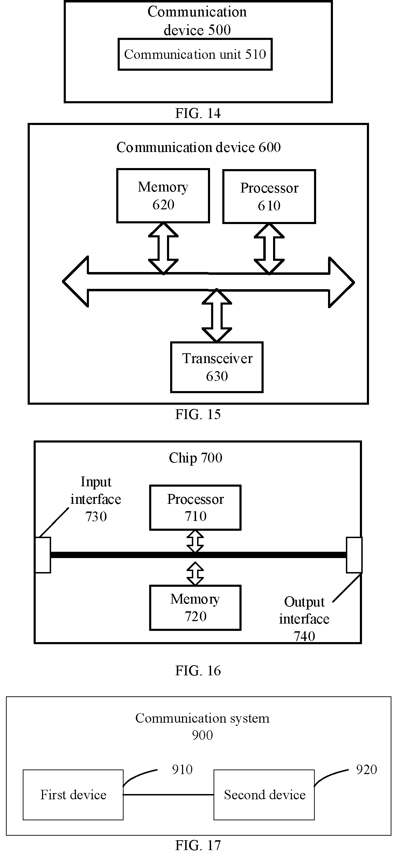

FIG. 14 shows a schematic block diagram of a communication device 500 according to the embodiments of the present disclosure. As shown in FIG. 14, the communication device 500 includes:
a communication unit 510, configured to transmit target access response information to a first device, where the target access response information is transmitted through a back scattering mode, or the access response information is transmitted through a back scattering mode and an active transmission mode, the target access response information is response information of a target access request signal, and the target access request information is used for the first device to access the communication device.

In some embodiments, the target access request information includes at least one of:
first access request information, where the first access request information is used to request access to the communication device; or
second access request information, where the second access request information is used to respond to inquiry information of the communication device, and the inquiry information is response information of the first access request information.

In some embodiments, the target access response information includes at least one of:
inquiry information of the communication device; or
access authentication result information.

In some embodiments, the first access request information includes at least one of:
identity information of the first device, or to-be-transmitted service information requested by the first device.

In some embodiments, the inquiry information of the communication device includes at least one of: identity information of the communication device, key-related information, or available access frequency band information.

In some embodiments, the inquiry information of the communication device is transmitted through broadcasting, multicasting or unicasting.

In some embodiments, the inquiry information of the communication device is transmitted through a specific signal, and the specific signal is used as a carrier signal of the second access request information.

In some embodiments, the second access request information includes at least one of:
identity information of the first device, to-be-transmitted service information requested by the first device, key-related information determined according to the inquiry information of the communication device, or identity information of the communication device.

In some embodiments, the first access request information is transmitted through an active transmission mode; or
the first access request information is transmitted through a back scattering mode; or
the first access request information is transmitted through a back scattering mode and an active transmission mode.

In some embodiments, the second access request information is transmitted through an active transmission mode; or
the second access request information is transmitted through a back scattering mode; or
the second access request information is transmitted through a back scattering mode and an active transmission mode.

In some embodiments, the first access request information is transmitted on a first frequency band; and/or
the inquiry information of the communication device is transmitted on a second frequency band; and/or
the second access request information is transmitted on a third frequency band; and/or
the access authentication result information is transmitted on a fourth frequency band.

In some embodiments, the first frequency band is a common frequency band; or
the first frequency band is an operating frequency band of the first device; or
the first frequency band is a dedicated frequency band for back scattering communication.

In some embodiments, the second frequency band is an operating frequency band of the first device; or
the second frequency band is an available access frequency band, or
the second frequency band is an arbitrary frequency band.

In some embodiments, the third frequency band is an available access frequency band; or
the third frequency band is a dedicated frequency band for back scattering communication.

In some embodiments, the fourth frequency band is an available access frequency band or a dedicated frequency band for back scattering communication.

In some embodiments, the communication device includes a back scattering transmitter, and the back scattering transmitter is used to transmit a signal in a back scattering mode.

In some embodiments, the communication device includes a back scattering transmitter and a master transmitter, the back scattering transmitter is used to transmit a signal in a back scattering mode, and the master transmitter is used to transmit a signal in an active transmission mode. Optionally, in some embodiments, the above communication unit may be a communication interface or a transceiver, or an input and output interfaces of a communication chip or a system-on-chip. The above processing unit may be one or more processors.

It should be understood that the communication device 500 according to the embodiments of the present disclosure may correspond to the second device in the method embodiments of the present disclosure, and the above and other operations and/or functions of various units in the communication device 500 are respectively to implement the corresponding procedure of the second device in the method embodiments shown in FIG. 8 to FIG. 12, which will not be repeated herein for the sake of brevity.

FIG. 15 is a schematic structural diagram of a communication device 600 provided by the embodiments of the present disclosure. The communication device 600 shown in FIG. 15 includes a processor 610, and the processor 610 may invoke a computer program from a memory and execute the computer program to implement the methods in the embodiments of the present disclosure.

Optionally, as shown in FIG. 15, the communication device 600 may further include a memory 620. Herein, the processor 610 may invoke a computer program from the memory 620 and execute the computer program to implement the methods in the embodiments of the present disclosure.

Herein, the memory 620 may be a separate device independent from the processor 610, or may also be integrated into the processor 610.

Optionally, as shown in FIG. 15, the communication device 600 may further include a transceiver 630, and the processor 610 may control the transceiver 630 to communicate with other devices, specifically, may transmit information or data to other devices, or receive information or data transmitted by other devices.

Herein, the transceiver 630 may include a transmitter and a receiver. The transceiver 630 may further include an antenna, and the number of the antennas may be one or more.

Optionally, the communication device 600 may specifically be the first device of the embodiments of the present disclosure, and the communication device 600 may implement the corresponding procedure implemented by the first device in the various methods of the embodiments of the present disclosure, which will not be repeated herein for the sake of brevity.

Optionally, the communication device 600 may specifically be the second device of the embodiments of the present disclosure, and the communication device 600 may implement the corresponding procedure implemented by the second device in the various methods of the embodiments of the present disclosure, which will not be repeated herein for the sake of brevity.

FIG. 16 is a schematic structural diagram of a chip according to the embodiments of the present disclosure. The chip 700 shown in FIG. 16 includes a processor 710, the processor 710 may invoke a computer program from a memory and execute the computer program to implement the methods in the embodiments of the present disclosure.

Optionally, as shown in FIG. 16, the chip 700 may further include a memory 720. Herein, the processor 710 may invoke the computer program from the memory 720 and execute the computer program to implement the methods in the embodiments of the present disclosure.

Herein, the memory 720 may be a separate device independent from the processor 710, or may also be integrated into the processor 710.

Optionally, the chip 700 may further include an input interface 730. Herein, the processor 710 may control the input interface 730 to communicate with other devices or chips, and specifically, the input interface 730 may acquire information or data transmitted from other devices or chips.

Optionally, the chip 700 may further include an output interface 740. Herein, the processor 710 may control the output interface 740 to communicate with other devices or chips, and specifically, the output interface 740 may output information or data to other devices or chips.

Optionally, the chip may be applied to the first device in the embodiments of the present disclosure, and the chip may implement the corresponding procedure implemented by the first device in the various methods of the embodiments of the present disclosure, which will not be repeated herein for the sake of brevity.

Optionally, the chip may be applied to the second device in the embodiments of the present disclosure, and the chip may implement the corresponding procedure implemented by the second device in the various methods of the embodiments of the present disclosure, which will not be repeated herein for the sake of brevity.

It should be understood that the chip mentioned in the embodiments of the present disclosure may be referred to as a system on chip, a system chip, a chip system or a system-on-chip chip, etc.

FIG. 17 is a schematic block diagram of a communication system 900, provided by the embodiments of the present disclosure. As shown in FIG. 17, the communication system 900 includes a first device 910 and a second device 920.

Herein, the first device 910 may be configured to implement the corresponding functions implemented by the first device in the above methods, and the second device 920 may be configured to implement the corresponding functions implemented by the second device in the above methods, which will not be repeated herein for the sake of brevity.

It should be understood that the processor in the embodiments of the present disclosure may be an integrated circuit chip and have a processing capability of signals. In the implementation process, various steps of the above method embodiments may be completed by an integrated logic circuit of hardware in the processor or an instruction in a software form. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component. Various methods, steps and logical block diagrams disclosed in the embodiments of the present disclosure may be implemented or performed. A general-purpose processor may be a microprocessor, or the processor may also be any conventional processor, etc. The steps of the method disclosed in combination with the embodiments of the present disclosure may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that, the memory in the embodiments of the present disclosure may be a volatile memory or a non-volatile memory, or may include both volatile and non-volatile memories. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memory of the system and the method described herein is intended to include, but not limited to, these and any other suitable types of memories.

It should be understood that the above memory is exemplary but not limiting illustration, e.g., the memory in embodiments of the present disclosure may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present disclosure is intended to include, but not limited to, these and any other suitable types of memories.

The embodiments of the present disclosure further provide a computer readable storage medium for storing a computer program.

Optionally, the computer readable storage medium may be applied to the first device in the embodiments of the present disclosure, and the computer program enables a computer to perform the corresponding procedure implemented by the first device in the various methods of the embodiments of the present disclosure, which will not be repeated herein for the sake of brevity.

Optionally, the computer readable storage medium may be applied to the second device in the embodiments of the present disclosure, and the computer program enables a computer to perform the corresponding procedure implemented by the second device in the various methods of the embodiments of the present disclosure, which will not be repeated herein for the sake of brevity.

The embodiments of the present disclosure further provide a computer program product including computer program instructions.

Optionally, the computer program product may be applied to the first device in the embodiments of the present disclosure, and the computer program instructions enable a computer to perform the corresponding procedure implemented by the first device in the various methods of the embodiments of the present disclosure, which will not be repeated herein for the sake of brevity.

Optionally, the computer program product may be applied to the second device in the embodiments of the present disclosure, and the computer program instructions enable a computer to perform the corresponding procedure implemented by the second device in the various methods of the embodiments of the present disclosure, which will not be repeated herein for the sake of brevity.

The embodiments of the present disclosure further provide a computer program.

Optionally, the computer program may be applied to the first device in the embodiments of the present disclosure, the computer program when being executed on a computer, enables the computer to perform the corresponding procedure implemented by the first device in various methods of the embodiments of the present disclosure, which will not be repeated herein for the sake of brevity.

Optionally, the computer program may be applied to the second device in the embodiments of the present disclosure, the computer program when being executed on a computer, enables the computer to perform the corresponding procedure implemented by the second device in various methods of the embodiments of the present disclosure, which will not be repeated herein for the sake of brevity.

Those ordinary skilled in the art may realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present disclosure.

It can be clearly understood by those skilled in the art that, for convenience and brevity of the description, the specific working procedures of the system, the apparatus and the unit described above may refer to the corresponding procedures in the above method embodiments, which will not be repeated herein.

In the several embodiments provided by the application, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present disclosure may be integrated into one processing unit, or the various units may exist physically separately, or two or more units may be integrated into one unit.

If the described functions are implemented in the form of a software functional unit and sold or used as an independent product, they may be stored in a computer readable storage medium. Based on this understanding, the technical solution of the present disclosure essentially, or a part of the technical solution that contributes to the prior art, or a part of the technical solution, may be embodied in the form of a software product, and the computer software product is stored in a storage medium, and includes a plurality of instructions for enabling a computer device (which may be a personal computer, a server, or a network device) to perform all or some of steps of the methods described in the various embodiments of the present disclosure. And, the storage medium mentioned above includes a USB flash drive (U disk), a mobile hard disk, a Read-Only Memory (ROM), a Random Access Memory (RAM), a diskette, or an optical disk, and various mediums that may store program codes.

The above content is only specific implementations of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be subject to the protection scope of the claims.

## Claims

1. An access authentication method, comprising:
transmitting, by a first device, target access request information to a second device, wherein the target access request information is transmitted through a back scattering mode, or the target access request information is transmitted through a back scattering mode and an active transmission mode, and the target access request information is used for the first device to access the second device.

2. The method according to claim 1, wherein the target access request information comprises at least one of:
first access request information, wherein the first access request information is used to request access to the second device; or
second access request information, wherein the second access request information is used to respond to inquiry information of the second device, and the inquiry information is response information of the first access request information.

3. The method according to claim 2, wherein the first access request information comprises at least one of:
identity information of the first device, or to-be-transmitted service information requested by the first device.

4. The method according to claim 2 or 3, wherein the inquiry information of the second device comprises at least one of: key-related information, available access frequency band information, or identity information of the second device.

5. The method according to any one of claims 2 to 4, wherein the inquiry information of the second device is transmitted through broadcasting, multicasting or unicasting.

6. The method according to any one of claims 2 to 5, wherein the inquiry information of the second device is transmitted through a specific signal, and the specific signal is used as a carrier signal of the second access request information.

7. The method according to any one of claims 2 to 6, wherein the second access request information comprises at least one of:
identity information of the first device, to-be-transmitted service information requested by the first device, key-related information determined according to the inquiry information of the second device, or identity information of the second device.

8. The method according to any one of claims 2 to 7, wherein
the first access request information is transmitted on a first frequency band; and/or
the inquiry information of the second device is transmitted on a second frequency band; and/or
the second access request information is transmitted on a third frequency band.

9. The method according to claim 8, wherein
the first frequency band is a common frequency band; or
the first frequency band is an operating frequency band of the first device; or
the first frequency band is a dedicated frequency band for back scattering communication.

10. The method according to claim 8 or 9, wherein
the second frequency band is an operating frequency band of the first device; or
the second frequency band is an available access frequency band, or
the second frequency band is an arbitrary frequency band.

11. The method according to any one of claims 8 to 10, wherein
the third frequency band is an available access frequency band; or
the third frequency band is a dedicated frequency band for back scattering communication.

12. The method according to any one of claims 2 to 11, wherein
the inquiry information of the second device is transmitted through an active transmission mode; or
the inquiry information of the second device is transmitted through a back scattering mode; or
the inquiry information of the second device is transmitted through a back scattering mode and an active transmission mode.

13. The method according to any one of claims 1 to 12, wherein the method further comprises:
receiving, by the first device, access authentication result information transmitted from the second device.

14. The method according to claim 13, wherein the access authentication result information is transmitted on a fourth frequency band, and the fourth frequency band is an available access frequency band or a dedicated frequency band for back scattering communication.

15. The method according to claim 13 or 14, wherein
the access authentication result information is transmitted through an active transmission mode; or
the access authentication result information is transmitted through a back scattering mode; or
the access authentication result information is transmitted through a back scattering mode and an active transmission mode.

16. The method according to any one of claims 1 to 15, wherein the first device comprises a back scattering transmitter, and the back scattering transmitter is used to transmit a signal in a back scattering mode.

17. The method according to any one of claims 1 to 15, wherein the first device comprises a back scattering transmitter and a master transmitter, the back scattering transmitter is used to transmit a signal in a back scattering mode, and the master transmitter is used to transmit a signal in an active transmission mode.

18. An access authentication method, comprising:
transmitting, by a second device, target access response information to a first device, wherein the target access response information is transmitted through a back scattering mode, or the access response information is transmitted through a back scattering mode and an active transmission mode, and the target access response information is response information of a target access request signal, and the target access request information is used for the first device to access the second device.

19. The method according to claim 18, wherein the target access request information comprises at least one of:
first access request information, wherein the first access request information is used to request access to the second device; or
second access request information, wherein the second access request information is used to respond to inquiry information of the second device, and the inquiry information is response information of the first access request information.

20. The method according to claim 19, wherein the target access response information comprises at least one of:
inquiry information of the second device; or
access authentication result information.

21. The method according to claim 19 or 20, wherein the first access request information comprises at least one of:
identity information of the first device, or to-be-transmitted service information requested by the first device.

22. The method according to any one of claims 19 to 21, wherein the inquiry information of the second device comprises at least one of: key-related information, available access frequency band information, or identity information of the second device.

23. The method according to any one of claims 19 to 22, wherein the inquiry information of the second device is transmitted through broadcasting, multicasting or unicasting.

24. The method according to any one of claims 19 to 23, wherein the inquiry information of the second device is transmitted through a specific signal, and the specific signal is used as a carrier signal of the second access request information.

25. The method according to any one of claims 19 to 24, wherein the second access request information comprises at least one of:
identity information of the first device, to-be-transmitted service information requested by the first device, key-related information determined according to the inquiry information of the second device, or identity information of the second device.

26. The method according to any one of claims 19 to 25, wherein
the first access request information is transmitted through an active transmission mode; or
the first access request information is transmitted through a back scattering mode; or
the first access request information is transmitted through a back scattering mode and an active transmission mode.

27. The method according to any one of claims 19 to 26, wherein
the second access request information is transmitted through an active transmission mode; or
the second access request information is transmitted through a back scattering mode; or
the second access request information is transmitted through a back scattering mode and an active transmission mode.

28. The method according to any one of claims 19 to 27, wherein
the first access request information is transmitted on a first frequency band; and/or
the inquiry information of the second device is transmitted on a second frequency band; and/or
the second access request information is transmitted on a third frequency band; and/or
the access authentication result information is transmitted on a fourth frequency band.

29. The method according to claim 28, wherein
the first frequency band is a common frequency band; or
the first frequency band is an operating frequency band of the first device; or
the first frequency band is a dedicated frequency band for back scattering communication.

30. The method according to claim 28 or 29, wherein
the second frequency band is an operating frequency band of the first device; or
the second frequency band is an available access frequency band, or
the second frequency band is an arbitrary frequency band.

31. The method according to any one of claims 28 to 30, wherein
the third frequency band is an available access frequency band; or
the third frequency band is a dedicated frequency band for back scattering communication.

32. The method according to any one of claims 28 to 31, wherein the fourth frequency band is an available access frequency band or a dedicated frequency band for back scattering communication.

33. The method according to any one of claims 18 to 32, wherein the second device comprises a back scattering transmitter, and the back scattering transmitter is used to transmit a signal in a back scattering mode.

34. The method according to any one of claims 18 to 32, wherein the second device comprises a back scattering transmitter and a master transmitter, the back scattering transmitter is used to transmit a signal in a back scattering mode, and the master transmitter is used to transmit a signal in an active transmission mode.

35. A communication device, comprising:
a communication unit, configured to transmit target access request information to a second device, wherein the target access request information is transmitted through a back scattering mode, or the target access request information is transmitted through a back scattering mode and an active transmission mode, and the target access request information is used for the communication device to access the second device.

36. The communication device according to claim 35, wherein the target access request information comprises at least one of:
first access request information, wherein the first access request information is used to request access to the second device; or
second access request information, wherein the second access request information is used to respond to inquiry information of the second device, or the inquiry information is response information of the first access request information.

37. The communication device according to claim 36, wherein the first access request information comprises at least one of:
identity information of the communication device, or to-be-transmitted service information requested by the communication device.

38. The communication device according to claim 36 or 37, wherein the inquiry information of the second device comprises at least one of: key-related information, available access frequency band information, or identity information of the second device.

39. The communication device according to any one of claims 36 to 38, wherein the inquiry information of the second device is transmitted through broadcasting, multicasting or unicasting.

40. The communication device according to any one of claims 36 to 39, wherein the inquiry information of the second device is transmitted through a specific signal, and the specific signal is used as a carrier signal of the second access request information.

41. The communication device according to any one of claims 36 to 40, wherein the second access request information comprises at least one of:
identity information of the communication device, to-be-transmitted service information requested by the communication device, key-related information determined according to the inquiry information of the second device, or identity information of the second device.

42. The communication device according to any one of claims 36 to 41, wherein
the first access request information is transmitted on a first frequency band; and/or
the inquiry information of the second device is transmitted on a second frequency band; and/or
the second access request information is transmitted on a third frequency band.

43. The communication device according to claim 42, wherein
the first frequency band is a common frequency band; or
the first frequency band is an operating frequency band of the communication device; or
the first frequency band is a dedicated frequency band for back scattering communication.

44. The communication device according to claim 42 or 43, wherein
the second frequency band is an operating frequency band of the communication device; or
the second frequency band is an available access frequency band, or
the second frequency band is an arbitrary frequency band.

45. The communication device according to any one of claims 42 to 44, wherein
the third frequency band is an available access frequency band; or
the third frequency band is a dedicated frequency band for back scattering communication.

46. The communication device according to any one of claims 36 to 45, wherein
the inquiry information of the second device is transmitted through an active transmission mode; or
the inquiry information of the second device is transmitted through a back scattering mode; or
the inquiry information of the second device is transmitted through a back scattering mode and an active transmission mode.

47. The communication device according to any one of claims 35 to 46, wherein the communication unit is further configured to:
receive authentication result information transmitted from the second device.

48. The communication device according to claim 47, wherein the access authentication result information is transmitted on a fourth frequency band, and the fourth frequency band is an available access frequency band or a dedicated frequency band for back scattering communication.

49. The communication device according to claim 47 or 48, wherein
the access authentication result information is transmitted through an active transmission mode; or
the access authentication result information is transmitted through a back scattering mode; or
the access authentication result information is transmitted through a back scattering mode and an active transmission mode.

50. The communication device according to any one of claims 35 to 49, wherein the communication device comprises a back scattering transmitter, and the back scattering transmitter is used to transmit a signal in a back scattering mode.

51. The communication device according to any one of claims 35 to 49, wherein the communication device comprises a back scattering transmitter and a master transmitter, the back scattering transmitter is used to transmit a signal in a back scattering mode, and the master transmitter is used to transmit a signal in an active transmission mode.

52. A communication device, comprising:
a communication unit, configured to transmit target access response information to a first device, wherein the target access response information is transmitted through a back scattering mode, or the access response information is transmitted through a back scattering mode and an active transmission mode, the target access response information is response information of a target access request signal, and the target access request information is used for the first device to access the communication device.

53. A communication device, comprising: a processor, a transceiver and a memory, wherein the memory is configured to store a computer program, the transceiver is configured to communicate with other devices, the processor is configured to invoke and execute the computer program stored in the memory, so as to enable the communication device to perform the method according to any one of claims 1 to 17.

54. A communication device, comprising: a processor, a transceiver and a memory, wherein the memory is configured to store a computer program, the transceiver is configured to communicate with other devices, the processor is configured to invoke and execute the computer program stored in the memory, so as to control the communication device to perform the method according to any one of claims 18 to 34.

55. A chip, comprising: a processor, configured to invoke a computer program from a memory and execute the computer program, so as to enable a device equipped with the chip to perform the method according to any one of claims 1 to 17 or the method according to any one of claims 18 to 34.

56. A computer readable storage medium, wherein the computer readable storage medium is configured to store a computer program and the computer program enables a computer to perform the method according to any one of claims 1 to 17 or the method according to any one of claims 18 to 34.

57. A computer program product, comprising computer program instructions, wherein the computer program instructions enable a computer to perform the method according to any one of claims 1 to 17 or the method according to any one of claims 18 to 34.

58. A computer program, wherein the computer program enables a computer to perform the method according to any one of claims 1 to 17 or the method according to any one of claims 18 to 34.
